# EUROPÄISCHE PATENTSCHRIFT

(11) **EP 1 485 727 B1**
(45) Veröffentlichungstag und Bekanntmachung des Hinweises auf die Patenterteilung: **05.12.2007**
(21) Anmeldenummer: 03711966.6
(22) Anmeldetag: 11.03.2003
(51) Int. Cl.: G01S 5/14, G01S 1/04, G01S 1/68

(54) **VERFAHREN UND ANORDNUNGEN ZUR ÜBERTRAGUNG VON PSEUDOLITE-TRAJEKTORIEN INNERHALB VON NAVIGATIONSDATEN EINES SATELLITEN-NAVIGATIONSSYSTEMS**
METHOD AND ARRANGEMENTS FOR THE TRANSMISSION OF PSEUDOLITE TRAJECTORIES WITHIN NAVIGATION DATA OF A SATELLITE NAVIGATION SYSTEM
PROCEDE ET DISPOSITIFS DE TRANSMISSION DE TRAJECTOIRES DE PSEUDOLITES DANS LES DONNEES DE NAVIGATION D'UN SYSTEME DE NAVIGATION PAR SATELLITES

(30) Priorität: 16.03.2002 DE 10211714
(43) Veröffentlichungstag der Anmeldung: 15.12.2004
(73) Patentinhaber: Astrium GmbH, 81663 München (DE)
(72) Erfinder: TRAUTENBERG, Hans, Ludwig, 92318 Neumarkt (DE)
(74) Vertreter: Ulrich, Thomas
(86) Internationale Anmeldenummer: PCT/EP2003/002459
(87) Internationale Veröffentlichungsnummer: WO 2003/079044

(56) Entgegenhaltungen:
- US-A- 5 177 489
- US-A- 5 686 924
- US-A- 5 886 666
- US-A- 6 101 178
- US-B1- 6 300 898
- US-B1- 6 336 076

## Beschreibung

Die vorliegende Erfindung betrifft das Anwendungsgebiet der Übertragung von Navigationsdaten an Teilnehmer-Endgeräte eines Satelliten-Navigationssystems, welches Navigationssatelliten und Pseudolites umfasst.

Die Verwendung von Pseudolites zur Erhöhung der Genauigkeit und der Redundanz von Satelliten-Navigationssystemen, insbesondere in solchen Gebieten der Erdoberfläche, in denen nur eine eingeschränkte Sichtverbindung zu Navigationssatelliten besteht, ist prinzipiell aus US 5,177,489 A sowie aus US 5,686,924 A bekannt.

Die US 6,101,178 A beschreibt unterschiedliche Möglichkeiten, einem Teilnehmer-Endgerät die Position von Pseudolites zu übermitteln. Das Teilnehmer-Endgerät kann dann auf Basis der Positionsdaten der Pseudolites und der von den Pseudolites empfangenen Navigationsdaten entweder die Genauigkeit der Bestimmung der eigenen Position mit Hilfe von Navigationssatelliten erhöhen oder es kann in Gebieten, in denen der Empfang von Navigationsdaten einiger oder aller Navigationssatelliten gestört ist, die Positionsbestimmung mit Hilfe der Pseudolites durchführen.

Problematisch bei diesem bekannten Stand der Technik ist jedoch, dass zusätzliche Funkressourcen wie separate Funkkanäle oder spezielle Protokolle notwendig sind, um die Positionsinformationen der Pseudolites an die Teilnehmer-Endgeräte zu übertragen. Damit können solche Positionsinformationen der Pseudolites nur von Teilnehmer-Endgeräten empfangen und verwertet werden, die - im Vergleich zu üblichen Teilnehmer-Endgeräten eines Satelliten-Navigationssystems - zusätzliche Empfangskomponenten enthalten müssen, die speziell an diese Informationen und zusätzlichen Übertragungskanäle anzupassen sind, und es werden kostbare Funkressourcen belegt. Für übliche Teilnehmer-Endgeräte, die diese speziellen, zusätzlichen Funktionen nicht aufweisen, ist die Übertragung der Pseudolite-Positionsinformationen nicht transparent, d.h. sie kann von diesen Teilnehmer-Endgeräten nicht genutzt werden.

US 6,336,076 B1 schlägt vor, dass Pseudolites ein Pseudolite Global Positioning Signal übertragen, welches eine modifizierte Version einer konventionellen GPS Satelliten-Ephemeriden-Nachricht sein kann. Diese Nachricht enthält insbesondere Ephemeridendaten für einen GPS-Satelliten oder für ein Pseudolite. Es soll also die Position sowohl der Pseudolites als auch der GPS-Satelliten mit Hilfe von Ephemeridendaten übertragen werden, welche auf Keplergleichungen, also auf der Beschreibung eines Orbits in einem Zentralkraftfeld basieren. Eine solche Beschreibung der Pseudolites mit Hilfe von Ephemeridendaten entspricht jedoch nicht der realen Bewegung der Pseudolites in einem inertialen Koordinatensystem, da beispielsweise auf der Erdoberfläche fixierte Pseudolites sich gerade nicht frei auf einem Orbit in einem Zentralkraftfeld bewegen.

E. W. Grafarend, V. S. Schwarze: "Das Global Positioning System", Physik Journal 1 (2002) Nr. 1, Wiley-VCH-Verlag GmbH, S. 39 - 44 schlägt vor, bei der Bestimmung der Satellitenbahn von Navigationssatelliten auch relativistische Effekte zu berücksichtigen, die zu einer Abweichung der Satellitenbahn von einer Keplerbahn führen können. Es wird jedoch dort keinerlei Hinweis auf Pseudolites gegeben, außerdem sind relativistische Effekte, die auf einer relativistischen Trajektionskorrektur beruhen, bei einer Navigation mit Hilfe von Pseudolites nicht spürbar. Damit sind die dort beschriebenen Vorschläge für Pseudolites nicht relevant.

US 5,886,666 beschreibt ein flugzeug-gestütztes Pseudolite-Navigationssystem als Ergänzung eines GPS-Satelliten-Navigationssystems. Dabei werden im Rahmen einer modifizierten GPS Satelliten-Ephemeriden-Nachricht Daten an Navigations-Endgeräte übertragen, die eine fixe Position eines Pseudolites basierend auf den Kepler-Gleichungen beschreiben. Abweichungen von dieser fixen Position können optional in Form einer Vektor-Fehlerkorrektur über einen separaten Datenlink an die Navigations-Endgeräte übertragen werden. Auch in diesem Fall sind entweder nur unzureichende Beschreibungen der realen Bewegung der Pseudolites oder alternativ wiederum separate Kanäle für die Übertragung von zusätzlichen Korrekturdaten zur Beschreibung orbitabweichender Bewegungen der Pseudolites vorgesehen.

Aufgabe der vorliegenden Erfindung ist es daher, eine Möglichkeit bereitzustellen, die diese Nachteile des Standes der Technik behebt und insbesondere eine verbesserte Positionsbestimmung von Pseudolites erlaubt. Diese Aufgabe wird gelöst durch die Merkmale der Patentansprüche 1, 6, 12, 16 und 17.

Ein erster Gegenstand der vorliegenden Erfindung, ist ein Verfahren zur Übertragung von Navigationsdaten an Teilnehmer-Endgeräte eines Satelliten-Navigationssystems, welches Navigationssatelliten und Pseudolites umfasst. Die Erfindung sieht vor, dass im Rahmen der Navigationsdaten Positionsinformationen für mindestens ein Pseudolite in Form eines Modells einer Pseudolite-Trajektorie in einem Referenz-Koordinatensystem übertragen werden, wobei das Modell orbitabweichende Bewegungen des mindestens einen Pseudolites berücksichtigt. Im Stand der Technik nach US 6,101,178 A bzw. US 6,336,076 B1 ist dies nicht vorgesehen. Es wird dort vielmehr in US 6,101,178 A Spalte 9 beschrieben, dass zwar Navigationssatelliten im Rahmen ihrer Navigationsdaten Informationen über einen Satelliten-Almanach, Ephemeris-Korrekturdaten und Uhrenkorrekturdaten übertragen, dies für Pseudolites aber nicht vorgesehen ist. US 6,336,076 B1 beschreibt zwar die Übertragung von Ephemeridendaten, also die Beschreibung von Orbitbewegungen für Pseudolites, was aber für die Beschreibung der tatsächlichen Bewegungen der Pseudolites meist ein ungeeignetes Modell ist. Vorteil des erfindungsgemäßen Verfahrens ist, dass einerseits keine separaten Kanäle oder Protokolle für die Übertragung der Positionsinformationen der Pseudolites notwendig sind, sondern diese Übertragung im Rahmen der ohnehin vorgesehenen Übertragung von Navigationsdaten erfolgt. Weiterhin werden die Positionsinformationen der Pseudolites nicht als absolute Positionen, sondern in Form eines Modells einer Pseudolite-Trajektorie in einem Referenz-Koordinatensystem übertragen, wobei das Modell orbitabweichende Bewegungen des mindestens einen Pseudolites berücksichtigt. Als Referenz-Koordinatensystem kann z.B. ein inertiales Koordinatensystem verwendet werden, dessen Ursprung im Erdmittelpunkt liegt und in dem die Erde rotiert. Alternativ kann aber auch ein Referenz-Koor dinatensystem gewählt werden, das gleichförmig mit der Erde rotiert, nutiert und präzisiert, also ein Referenz-Koordindatensystem, in dem die Erde ruht. Die Verwendung eines Modells für eine Pseudolite-Trajektorie welches Modell orbitabweichende Bewegungen des mindestens einen Pseudolites berücksichtigt, lässt eine größere Genauigkeit der Positionsinformationen und der Positionsbestimmung der Pseudolites und des Teilnehmer-Endgerätes zu, da in dem Modell vorherbestimmbare oder geschätzte Relativbewegungen der Pseudolites zu einem Teilnehmer-Endgerät berücksichtigt werden können.

Im Rahmen des Modells für die Pseudolite-Trajektorie können insbesondere die zeitlichen Änderungen der Oberflächenstruktur der Erde berücksichtigt werden. Diese zeitlichen Änderungen der Oberflächenstruktur der Erde können eine Bewegung eines auf der Oberfläche der Erde fixierten Pseudolites bewirken, die gerade für Positionsbestimmungen mit hoher Genauigkeit durchaus spürbare Einflüsse auf die Messgenauigkeit haben kann. Solche zeitlichen Änderungen der Oberflächenstruktur der Erde werden insbesondere durch die Gezeiten der Meere bei einer Fixierung des Pseudolites auf der Meeresoberfläche oder durch die Gezeiten der Kontinentalplatten des Festlandes hervorgerufen werden. Diese periodisch auftretenden und daher vorhersagbaren zeitlichen Änderungen der Oberflächenstruktur der Erde können mit in das Modell für die Pseudolite-Trajektorie in einem Referenz-Koordinatensystem integriert werden.

Die Pseudolite-Trajektorie kann aber auch eine andere Art der Bewegung des Pseudolites beschreiben, insbesondere dann, wenn das Pseudolite nicht auf der Oberfläche der Erde fixiert ist, sondern auf einem geeigneten Landfahrzeug, Wasserfahrzeug, Luftfahrzeug oder Raumfahrzeug installiert ist, dessen Bewegung durch ein geeignetes Modell beschrieben werden kann. Dies könnte z.B. für die Installation von Pseudolites auf Satelliten Anwendung finden, deren Satellitenbahn z.B. höher oder niedriger ist als die Bahn der Navigationssatelliten.

Andererseits kann auch das Format der zu übertragenden Daten vereinfacht werden, wenn auch Positionsinformationen für Navigationssatelliten im Rahmen der Navigationsdaten übertragen werden, da dann die Datenformate und ggf. auch die Dateninhalte der Positionsinformationen der Pseudolites und der Navigationssatelliten vereinheitlicht werden können. Hierbei kann insbesondere vorgesehen werden, dass im Rahmen der Navigationsdaten auch Positionsinformationen für Navigationssatellifen in Form eines Modells einer Navigationssateiliten-Trajektorie in demselben Referenz-Koordinatensystem wie für die Pseudolites übertragen werden. Hierbei kann ein gemeinsames Modell für die Pseudolite-Trajektorie und für die Navigationssatelliten-Trajektorie verwendet werden, welches bevorzugt aus einem ersten Untermodell zur Beschreibung von Orbitbewegungen und einem zweiten Untermodell zur Beschreibung von orbitabweichenden Bewegungen besteht.

Alternativ kann aber auch vorgesehen werden, dass im Rahmen der Navigationsdaten zwar zusätzlich Positionsinformationen für Navigationssatelliten in Form eines Modells einer Navigationssatelliten-Trajektorie in demselben Referenz-Koordinatensystem wie für die Pseudolites übertragen werden, jedoch separate Modelle für die Pseudolite-Trajektorie und für die Navigationssatelliten-Trajektorie verwendet werden, und eine Kennzeichnung des jeweiligen Modells innerhalb der Navigationsdaten vorgesehen ist. Eine solche Kennzeichnung kann beispielsweise durch einen zusätzlichen Datenbereich innerhalb der Navigationsdaten erfolgen, z.B. durch ein spezielles Flag, das den Modelldaten vorangestellt wird und die Art des Modells (Pseudolite-Modell oder Navigationssatelliten-Modell) anzeigt.

Es kann also grundsätzlich von den Navigationssatelliten und den Pseudolites zumindest ein einheitliches Datenformat für die Übertragung der Navigationsdaten und der darin enthaltenen Positionsinformationen verwendet werden. Für Beispiele für ein einheitliches Datenformat kann auf US 6,336,076 B1 verwiesen werden. Damit wird die Verarbeitung der empfangenen Navigationsdaten im Teilnehmer-Endgerät deutlich vereinfacht, was auch den entsprechenden Aufwand für die Fertigung und den Betrieb der Teilnehmer-Endgeräte verringert. Weiter kann auch vorgesehen werden, dass von den Navigationssatelliten und den Pseudolites die gleiche Frequenz oder das gleiche Frequenzband zur Übertragung der Navigationsdaten verwendet wird, und von jedem Pseudolite und von jedem Navigationssatelliten ein eigener Code zur Codemultiplex-Codierung der Navigationsdaten verwendet wird. Damit kann ebenfalls insbesondere der Aufwand für die Teilnehmer-Endgeräte verringert werden, da nur eine Frequenz bzw. nur ein Frequenzband empfangen werden muss und es wird auch der Bedarf an Übertragungskapazitäten (Frequenzen bzw. Frequenzbändern) verringert.

Es können aber auch alternativ ein Teil der Pseudolites oder alle Pseudolites den gleichen Code einer Codemultiplex-Codierung verwenden. Diese gilt insbesondere für bestimmte Pseudolites, bei denen sich keine Beeinträchtigung der Teilnehmer-Endgeräte ergeben, wenn diese Pseudolites den gleichen Code benutzen. Bespiele hierfür sind räumlich weit entfernte Pseudolites, wobei hier z.B. eine begrenzte Zahl von Codes gewählt werden könnte und sich diese Codes räumlich in definerteni Abständen wiederholen könnten. Es kann aber auch vorgesehen werden, dass in Bereichen, in denen sich die Navigationsdaten der Pseudolites stören, welche den gleichen Code verwenden, die Teilnehmer-Endgeräte diese Störungen detektieren und die Navigationsdaten dieser Pseudolites nicht für eine Navigation verwenden.

Ein weiterer Gegenstand der vorliegenden Erfindung ist ein Satelliten-Navigationssystem, aufweisend Navigationssatelliten und Pseudolites, wobei die Navigationssatelliten und die Pseudolites Übertragungseinrichtungen zur Übertragung von Navigationsdaten an Teilnehmer-Endgeräte aufweisen. Gemäß der Erfindung ist vorgesehen, dass die Pseudolites jeweils eine Einrichtung aufweisen, ausgebildet einerseits zur Bereitstellung von Modelldaten einer Pseudolite-Trajektorie in einem Referenz-Koordinatensystem, wobei die Modelldaten orbitabweichende Bewegungen des mindestens einen Pseudolites berücksichtigen, und andererseits zur Einfügung der Modelldaten in die Navigationsdaten. Dadurch können vereinfachte Navigationsdaten bereitgestellt werden und es ergeben sich Vereinfachungen für die Teilnehmer-Endgeräte, wie bereits im Rahmen des vorher beschriebenen Verfahrens erläutert wurde. Dieses Satelliten-Navigationssystem ist also dazu ausgelegt, Navigationsdaten nach einem vorstehend beschriebenen Verfahren an die Teilnehmer-Endgeräte zu übertragen.

Weiterhin kann vorgesehen werden, dass die Navigationssatelliten jeweils eine Einrichtung zur Bereitstellung von Modelldaten einer Navigationssatelliten-Trajektorie in demselben Referenz-Koordinatensystem und zur Einfügung der Modelldaten in die Navigationsdaten aufweisen. Hierbei ist insbesondere vorgesehen, dass alle Einrichtungen zur Bereitstellung von Modelldaten derart ausgebildet sind, dass ein gemeinsames Modell für die Pseudolite-Trajektorie und für die Navigationssatelliten-Trajektorie verwendet wird, welches bevorzugt aus einem ersten Untermodell zur Beschreibung von Orbitbewegungen und einem zweiten Untermodell zur Beschreibung von orbitabweichenden Bewegungen besteht. Alternativ können aber die Einrichtungen zur Bereitstellung von Modelldaten der Pseudolites und der Navigationssatelliten derart ausgebildet sein, dass separate Modelle für die Pseudolite-Trajektorie und für die Navigationssatelliten-Trajektorie verwendet werden, und eine Kennzeichnung des jeweiligen Modells innerhalb der Navigationsdaten vorgesehen ist. Hierfür kann das bereits beschriebene Verfahren herangezogen werden und es ergeben sich die dort genannten Vorteile.

Insbesondere können alle Übertragungseinrichtungen und Einrichtungen zur Bereitstellung von Modelldaten derart ausgebildet sind, dass von den Navigationssatelliten und den Pseudolites ein einheitliches Datenformat zur Übertragung der Navigationsdaten verwendet wird. Es können auch alle Übertragungseinrichtungen zur Übertragung von Navigationsdaten derart ausgebildet sein, dass von den Navigationssatelliten und den Pseudolites die gleiche Frequenz oder das gleiche Frequenzband zur Übertragung der Navigationsdaten verwendet wird, und von jedem Pseudolite und von jedem Navigationssatelliten ein eigener Code zur Codemultiplex-Codierung der Navigationsdaten verwendet wird. Zu den Vorteilen, die sich hieraus ergeben, wird auf die Erläuterungen des bereits beschriebenden Verfahrens verwiesen.

Es kann aber auch alternativ vorgesehen werden, dass die Übertragungseinrichtungen zur Übertragung von Navigationsdaten der Pseudolites derart ausgebildet sind, dass ein Teil der Pseudolites oder alle Pseudolites den gleichen Code zur Codemultiplex-Codierung der Navigationsdaten verwenden. Diese gilt insbesondere für bestimmte Pseudolites, bei denen sich keine Beeinträchtigung der Teilnehmer-Endgeräte ergeben, wenn diese Pseudolites den gleichen Code benutzen. Bespiele hierfür sind räumlich weit entfernte Pseudolites, wobei hier z.B. eine begrenzte Zahl von Codes gewählt werden könnte und sich diese Codes räumlich in definierten Abständen wiederholen könnten. Es kann aber auch vorgesehen werden, dass in Bereichen, in denen sich die Navigationsdaten der Pseudolites stören, welche den gleichen Code verwenden, die Teilnehmer-Endgeräte diese Störungen detektieren und die Navigationsdaten dieser Pseudolites nicht für eine Navigation verwenden.

Ein weiterer Gegenstand der vorliegenden Erfindung ist ein Teilnehmer-Endgerät für ein Satelliten-Navigationssystem, aufweisend eine Empfangseinrichtung zum Empfang von Navigationsdaten von Navigationssatelliten und Pseudolites, in die nach einem vorstehend beschriebenen Verfahren Modelldaten einer Pseudolite-Trajektorie in einem Referenz-Koordinatensystem eingefügt wurden. Gemäß der Erfindung umfasst das Teilnehmer-Endgerät eine Positionsmodell-Dekodiereinrichtung zur Extraktion von Modelldaten einer Pseudolite-Trajektorie in einem Referenz-Koordinatensystem aus den Navigationsdaten, wobei die Positionsmodell-Dekodiereinrichtung weiterhin ausgelegt ist zur Berücksichtigung von Modelldaten orbitabweichender Bewegungen mindestens eines Pseudolites und zur Positionsbestimmung mindestens eines Pseudolites auf Basis der Modelldaten. Eine solche Einrichtung ist insbesondere mit wesentlich geringerem Aufwand realisierbar als separate Einrichtungen zum Empfang und zur Dekodierung separater Kanäle bzw. Protokolle für Positionsinformationen von Pseudolites, wie sie der Stand der Technik erfordert. Außerdem ermöglicht ein solches Teilnehmer-Endgerät aufgrund der berücksichtigten Modelldaten eine wesentlich genauere Bestimmung der Position von Pseudolites und als Resultat auch eine wesentlich genaure Bestimmung der eigenen Position als es der Stand der Technik bisher zulässt.

Dies gilt insbesondere, wenn die Positionsmodell-Dekodiereinrichtung außerdem zur Extraktion von Modelldaten einer Navigationssatelliten-Trajektorie in demselben Referenz-Koordinatensystem aus den Navigationsdaten und zur Positionsbestimmung mindestens eines Navigationssatelliten auf Basis der Modelldaten ausgebildet ist. Damit kann der Datenverarbeitungsaufwand in dem Teilnehmer-Endgerät vereinheitlicht und damit weiter deutlich vereinfacht werden.

Dabei kann vorgesehen werden, dass die Positionsmodell-Dekodiereinrichtung zur Erkennung und Extraktion eines gemeinsamen Modells für die Pseudolite-Trajektorie und für die Navigationssatelliten-Trajektorie ausgebildet ist, welches bevorzugt aus einem ersten Untermodell zur Beschreibung von Orbitbewegungen und einem zweiten Untermodell zur Beschreibung von orbitabweichenden Bewegungen besteht. Alternativ kann aber auch vorgesehen werden, dass die Positionsmodell-Dekodiereinrichtung zur Erkennung und Extraktion separater Modelle für die Pseudolite-Trajektorie und für die Navigationssatelliten-Trajektorie aufgrund einer Kennzeichnung des jeweiligen Modells innerhalb der Navigationsdaten ausgebildet ist. Welche der Möglichkeiten gewählt wird, richtet sich danach, welche Art von Modellen in dem bereits beschriebenen Verfahren gewählt wurde.

Bevorzugt sind die Empfangseinrichtung und die Positionsmodell-Dekodiereinrichtung eines Teilnehmer-Endgerätes zur Verarbeitung eines einheitlichen Datenformates von den Navigationssatelliten und den Pseudolites ausgebildet. Werden alle Navigationsdaten von allen Pseudolites und allen Navigationssa-telliten auf gleichen Frequenz oder in dem gleichen Frequenzband gesendet, so wird die Empfangseinrichtung des Teilnehmer-Endgerätes derart ausgebildet, dass einerseits von den Navigationssatelliten und den Pseudolites Navigations-daten auf der gleichen Frequenz oder in dem gleichen Frequenzband empfangen werden können, und andererseits die Navigationsdaten jedes Pseudolites und jedes Navigationssatelliten mit Hilfe eines jeweils eigenen Codes zur Codemul-tiplex-Decodierung decodiert werden. Für die Decodierung der Navigationsdaten wird also für jedes Pseudolite und jeden Navigationssatelliten ein anderer Code nach einem üblichen Codemultiplex-Verfahren verwendet.

Ein weiterer Gegenstand der vorliegenden Erfindung ist ein Computer-Programm zur Verarbeitung von Navigationsdaten von Navigationssatelliten und Pseudolites, in die nach einem vorstehend beschriebenen Verfahren Modelldaten einer Pseudolite-Trajektorie in einem Referenz-Koordinatensystem eingefügt wurden, wobei das Computerprogramm Modelldaten für orbitabweichende Bewegungen mindestens eines Pseudolites berücksichtigt. Das Computer-Programm kann weiterhin so angepasst sein, dass es auch Navigationsdaten verarbeiten kann, die über das Einfügen von Modelldaten einer Pseudolite-Trajektorie in einem Referenz-Koordinatensystem hinaus nach einem vorstehend beschriebenen Verfahren erzeugt wurden, also z.B. auch hinsichtlich Navigationssatettiten-Trajektorien, bestimmten Modellen und Datenformaten, etc. Das Computer-Programm ist dabei für ein Zusammenwirken mit einer Positionsmodell-Dekodiereinrichtung eines Teilnehmer-Endgerätes, wie es vorstehend beschrieben wurde, ausgebildet.

Schließlich umfasst die Erfindung ein Computer-Programm-Produkt beinhaltend einen maschinenlesbaren Programmträger, auf dem ein vorstehend beschriebenes Computer-Programm in Form von elektronisch auslesbaren Steuersignalen gespeichert ist. Die Steuersignale können in jeder geeigneten Form gespeichert sein, die elektronische Auslesung kann dann entsprechend durch elektrische, magnetische, elektromagnetische, elektrooptische oder sonstige elektronische Verfahren erfolgen. Beispiele für solche Programmträger sind Magnetbänder, Disketten, Festplatten, CD-ROM oder Halbleiterbausteine.

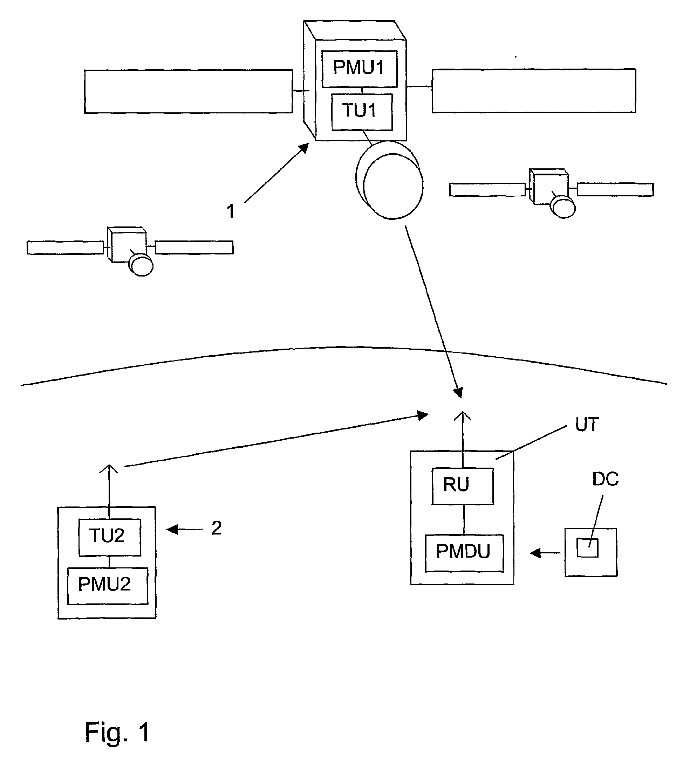

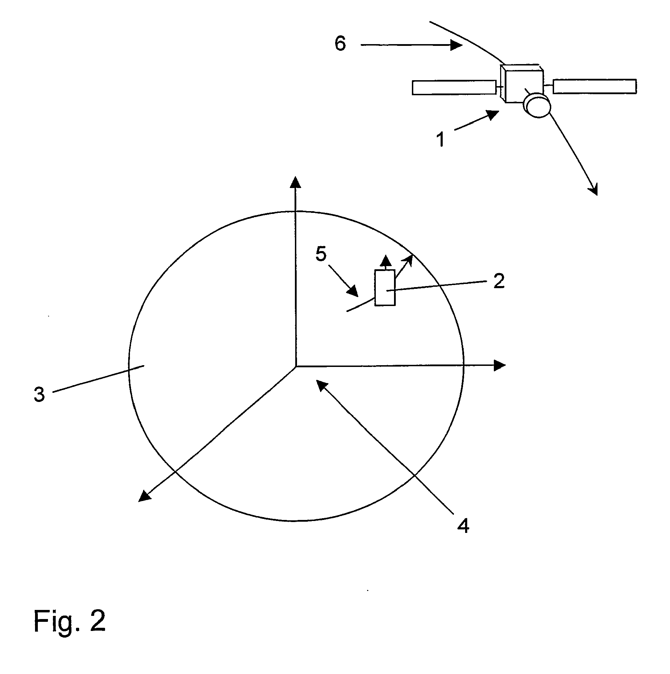

Nachfolgend wird anhand der Figuren 1 und 2 ein spezielles Ausführungsbeispiel der vorliegenden Erfindung im Rahmen eines Satelliten-Navigationssystems erläutert.

Es zeigen:
- Fig. 1: Schematische Darstellung eines erfindungsgemäßen Satelliten-Navigationssystems mit Pseudolites und eines erfindungsgemäßen Endgerätes
- Fig. 2: Schematische Darstellung einer,Pseudolite-Trajektorie und einer Navigationssatelliten-Trajektorie in einem inertialen Referenz-Koordinatensystem.

Fig. 1 zeigt schematisch ein Satelliten-Navigationssystem mit mehreren Navigationssatelliten 1 (beispielsweise GPS, GLONASS oder ähnliche zukünftige Systeme wie GALILEO) sowie mit Pseudolites 2 zur Erhöhung der Genauigkeit oder der Redundanz des Satelliten-Navigationssystems. In Fig. 1 ist exemplarisch ein Pseudolite 2 dargestellt, das im Fall der Fig. 1 fest mit der Erdoberfläche (Festland oder Wasseroberfläche) verbunden sei. Das Pseudolite 2 kann aber auch auf, unter oder über der Erdoberfläche beweglich sein, beispielsweise auf einem geeigneten Landfahrzeug, Wasserfahrzeug, Luftfahrzeug oder Raumfahrzeug. Insbesondere kann das Pseudolite 2 dabei auf ein Fahrzeug oder ähnlichen beweglichen Körper angeordnet sein, dessen Bewegung vorhersagbar oder schätzbar ist, wie z.B. auf einem Zug, U-Bahn, Binnenschiff oder Flugzeug, deren Fahrtroute und Fahrzeiten bzw. Flugroute und Flugzeiten relativ genau bekannt oder ermittelbar sind oder auf einem Satelliten, dessen Trajektorie im Orbit ebenfalls relativ genau bekannt ist. Alle Navigationssatelliten 1 weisen jeweils mindestens eine Übertragungseinrichtung (Transmission Unit) TU1 zur Übertragung von Navigationsdaten an Teilnehmer-Endgeräte (User Terminals) UT auf. Dies ist in Fig. 1 exemplarisch für einen Navigationssatelliten 1 dargestellt. Die Pseudolites 2 weisen jeweils mindestens eine Übertragungseinrichtung TU2 zur Übertragung von Navigationsdaten an die Teilnehmer-Endgeräte UT auf.

Die Navigationssatelliten 1 weisen außerdem eine Einrichtung (Position Model Unit) PMU1 zur Bereitstellung von Modelldaten für die Trajektorie zumindest des jeweiligen Navigationssatelliten 1 auf, welche mit der Übertragungseinrichtung TU1 des Navigationssatelliten 1 datentechnisch verbunden ist. Die Einrichtung PMU1 zur Bereitstellung von Modelldaten veranlasst außerdem das Einfügen der Modelldaten für die Trajektorie zumindest des jeweiligen Navigationssatelliten 1 in die von diesem Navigationssatelliten 1 zu übertragenden Navigationsdaten. Informationen über weitere Navigationssatelliten 1 und/oder Pseudolites 2 können in Form eines Almanachs oder ebenfalls in Form eines Modells der jeweiligen Trajektorie mit in die Navigationsdaten eingefügt werden.

Die Pseudolites weisen zusätzlich zur Übertragungseinrichtung TU2 eine Einrichtung PMU2 zur Bereitstellung von Modelldaten für die Trajektorie zumindest des jeweiligen Pseudolites auf, welche mit der Übertragungseinrichtung TU2 des Pseudolites 2 datentechnisch verbunden ist. Die Einrichtung PMU2 zur Bereitstellung von Modelldaten veranlasst außerdem das Einfügen der Modelldaten für die Trajektorie zumindest des jeweiligen Pseudolites 2 in die von diesem Pseudolite 2 zu übertragenden Navigationsdaten. Informationen über weitere Navigationssatelliten 1 und/oder Pseudolites 2 können in Form eines Almanachs oder ebenfalls in Form eines Modells der jeweiligen Trajektorie mit in die Navigationsdaten eingefügt werden.

In Fig. 2 ist ein spezieller Fall für Modelle der Pseudolite-Trajektorien und der Navigationssatelliten-Trajektorien dargestellt. Das Referenz-Koordinatensystem wird durch ein inertiales Koordinatensystem 4 gebildet, dessen Ursprung im Zentrum der Erde 3 liegt und in dem die Erde rotiert. Daraus ergeben sich die Pseudolite-Tra-jektorien 5 und die Navigationssatelliten-Trajektorien 6 für die Pseudolites 2 und die Navigationssatelliten 1. Es kann nun ein gemeinsames Modell für diese Pseudolite-Trajektorien 5 und Navigationssatelliten-Trajektorien 6 gewählt werden, das zur Beschreibung der jeweiligen Trajektorien in dem Koordinatensystem 4 dient. Das Modell umfasst dabei für die Trajektorie der Pseudolites 2 nicht bzw. nicht nur die jeweilige Bahn in Form keplerscher Orbitmodelle und die Zusammenhang zwischen Bahnposition und Zeit, sondern idealerweise alternativ oder zusätzlich eine Modellierung von vorhersagbaren oder schätzbaren Einflüssen auf die Trajektorie, wie z.B. durch zeitliche Änderungen der Oberflächenstruktur der Erde, insbesondere durch Gezeiten-Effekte, oder durch Relativbewegungen der Pseudolites gegenüber der Erdoberfläche, wenn diese z.B. auf Fahrzeugen oder anderen beweglichen Körpern montiert sind.

Das gemeinsame Modell wird idealerweise durch ein erstes Untermodell zur Beschreibung von Orbitbewegungen und ein zweites Untermodell zur Beschreibung von orbitabweichenden Bewegungen gebildet. Es können hierzu insbesondere Matrizengleichungen aufgestellt werden, wobei mindestens eine erste Matrix A ein Orbitmodell, also Orbitbewegungen, beschreibt und mindestens eine zweite Matrix B orbitabweichende Bewegungen beschreibt. Das Gesamtmodell kann dann durch die Summe der Matrizen (A+B) gebildet werden, die dann mit einem Vektor x, der eine geeignete Darstellung oder Funktionen von Koordinaten und deren Ableitungen für Satelliten bzw. Pseudolites enthält, multipliziert wird, um die Bewegungsgleichungen zur Darstellung der Trajektorien zu erhalten. Es können einzelne Elemente bᵢⱼ der Matrix B derart gleich Null gesetzt werden, dass das Modell für die orbitabweichenden Bewegungen nur auf die Pseudolite-Koordinaten und deren Ableitungen Anwendung findet. Andererseits können auch einzelne Elemente aᵢⱼ der Matrix A derart gleich Null gesetzt werden, so dass das Modell der Orbitbewegungen nur auf die Satellitenkoordinaten und deren Ableitungen Anwendung findet. Es können aber die Elemente der Matrix A auch so gewählt werden, dass das Modell der Orbitbewegungen auf die Satellitenkoordinaten und deren Ableitungen und auf die Pseudolite-Koordinaten und deren Ableitungen Anwendung findet, wobei das Modell für die Pseudolite-Koordinaten und deren Ableitungen durch das Modell für die orbitabweichenden Bewegungen ergänzt wird und dadurch realistischer die Pseudolite-Trajektorie beschreiben kann als ein Modell basierend allein auf Ephemeridendaten.

Es können aber auch für die Pseudolite-Trajektorien 5 und die Navigationssatelliten-Trajektorien 6 unterschiedliche Modelle gewählt werden. Hierbei kann, analog zu den oben beschriebenen Modellen, für die Satellitenkoordinaten und deren Ableitungen ein Orbitmodell und für die Pseudolite-Koordinaten und deren Ableitungen ein Modell für die orbitabweichenden Bewegungen gewählt werden, wobei letzteres als Ergänzung zu einem Orbitmodell für Pseudolite-Koordinaten und deren Ableitungen vorgesehen werden kann. Diese unterschiedlichen Modelle können dann in den Navigationsdaten z.B. durch ein spezielles Flag gekennzeichnet werden, das den entsprechenden Modelldaten vorangestellt wird. Zur Vereinfachung wird in jedem dieser beiden Fälle idealerweise ein einheitliches Datenformat für die Modelldaten gewählt.

Um den Aufwand an Übertragungskapazität sowie den Aufwand für die Teilnehmer-Endgeräte möglichst gering zu halten, können die Navigationsdaten aller Navigationssatelliten 1 und Pseudolites 2 in einem Codemultiplex-Verfahren auf derselben Frequenz oder in demselben Frequenzband übertragen werden.

Das Teilnehmer-Endgerät UT weist eine Positionsmodell-Dekodiereinrichtung (Position Model Decoding Unit) PMDU auf, die mit der Empfangseinrichtung RU verbunden ist und zur Extraktion von Modelldaten einer Pseudolite-Trajektorie 5 und einer Navigationssatelliten-Trajektorie 6 in dem genannten Referenz-Koordinatensystem 4 aus den empfangenen Navigationsdaten dient. Für die Pseudolite-Trajektorie wird ein Modell verwendet, welches orbitabweichende Bewegungen des Pseudolites 2 berücksichtigt. Es erfolgt also, wie erwähnt, nicht lediglich eine Darstellung der Pseudolite-Position mit Hilfe von Ephemeridendaten, also von Orbitmodellen, die Trajektorie von Pseudolites nur unzureichend beschreiben, sondern es werden gerade die orbitabweichende Bewegungen des Pseudolites 2 modelliert. Dies kann entweder alternativ zu einer Darstellung der Pseudolite-Trajektorie 5 mit Hilfe eines Orbitmodells (z.B. Ephemeridendaten) oder in Kombination mit einer Darstellung der Pseudolite-Trajektorie 5 mit Hilfe eines Orbitmodells (z.B. Ephemeridendaten) erfolgen, im letzteren Fall also als Verbesserung eines vorliegenden Orbitmodells.

Weiterhin dient die eine Positionsmodell-Dekodiereinrichtung (Position Model Decoding Unit) PMDU zur Positionsbestimmung von Navigationssateliten 1 und Pseudolites 2 auf Basis der Modelldaten. Die Positionsmodell-Dekodiereinrichtung PMDU erkennt dabei, ob eines gemeinsamen Modells für die Pseudolite-Trajektorie 5 und für die Navigationssatelliten-Trajektorie 6 vorliegt oder ob separate Modelle für die Pseudofite-Trajektone 5 und für die Navigationssatelliten-Trajektorie 6 vorliegen, die beispielsweise durch ein geeignetes Flag, das den Modelldaten vorausgeht, innerhalb der Navigationsdaten gekennzeichnet sind.

Wenn - wie in diesem Beispiel vorgeschlagen - ein einheitliches Datenformat für alle Navigationsdaten und damit auch alle Modelldaten gewählt wird, so wird auch die Empfangseinrichtung RU und die Positionsmodell-Dekodiereinrichtung PMDU des Teilnehmer-Endgeräte UT entsprechend zur Verarbeitung dieses einheitlichen Datenformates angepasst, was letztlich in einer Vereinfachung des Teilnehmer-Endgerätes UT resultiert. Entsprechendes gilt, wenn alle Navigationsdaten im Codemultiplex auf derselben Frequenz oder im selben Frequenzband übertragen werden. Dann kann die Empfangseinrichtung RU derart ausgebildet werden, dass von den Navigationssatelliten 1 und den Pseudolites 2 Navigationsdaten auf der gleichen Frequenz oder in dem gleichen Frequenzband empfangen werden können, und andererseits die Navigationsdaten jedes Pseudolites 2 und jedes Navigationssatelliten 1 mit Hilfe jeweils eines separaten Codes decodiert werden.

Alle im Teilnehmer-Endgerät notwendigen Verfahrensschritte zur Verarbeitung der Navigationsdaten in der Positionsmodell-Dekodiereinrichtung PMDU oder Teile davon können durch ein Computer-Programm ausgeführt werden. Das Computer-Programm ist dazu für ein Zusammenwirken mit der Positionsmodell-Dekodiereinrichtung PMDU des Teilnehmer-Endgerätes UT angepasst. Das Computer-Programm kann bevorzugt mit Hilfe eines Computer-Programm-Produktes in das Teilnehmer-Endgerät UT eingebracht werden, wobei das Computer-Programm-Produkt einen maschinenlesbaren Programmträger (Data Carrier) DC beinhaltet, auf dem das Computer-Programm in Form von elektronisch auslesbaren Steuersignalen gespeichert ist. Ein Beispiel für Programmträger wäre eine Chipkarte mit einem Halbleiterchip, in dem das Computerprogramm gespeichert ist. Es sind aber auch alle anderen geeigneten Arten von Computer-Programm-Produkten anwendbar, wie bereits erläutert wurde.

## Patentansprüche

1. Verfahren zur Übertragung von Navigationsdaten an Teilnehmer-Endgeräte (UT) eines Satelliten-Navigationssystems, welches Navigationssatelliten (1) und Pseudolites (2) umfasst, **dadurch gekennzeichnet, dass** im Rahmen der Navigationsdaten für mindestens ein Pseudolite (2) ein Modell einer Pseudolite-Trajektorie (5) in einem Referenz-Koordinatensystem (4), das die zeitlichen Änderungen der Oberflächenstruktur der Erde (3) und/oder Relativbewegungen des mindestens einen Pseudolites (2) relativ zur Oberfläche der Erde (3) repräsentiert, übertragen wird, welches orbitabweichende Bewegungen des mindestens einen Pseudolites (2) beschreibt, wobei das Modell dasselbe Referenz-Koordinatensystem (4) und dasselbe Datenformat, wie für die Navigationssatelliten (1), zur Übertragung der Navigationsdaten verwendet.

2. Verfahren nach Anspruch 1, **dadurch gekennzeichnet, dass** im Rahmen der Navigationsdaten Positionsinformationen für Navigationssatelliten (1) in Form eines Modells einer Navigationssatelliten-Trajektorie (6) in demselben Referenz-Koordinatensystem (4) übertragen werden und ein gemeinsames Modell für die Pseudolite-Trajektorie (5) und für die Navigationssatelliten-Trajektorie (6) verwendet wird, welches aus einem ersten Untermodell zur Beschreibung von Orbitbewegungen und einem zweiten Untermodell zur Beschreibung von orbitabweichenden Bewegungen besteht.

3. Verfahren nach Anspruch 1 oder 2, **dadurch gekennzeichnet, dass** im Rahmen der Navigationsdaten Positionsinformationen für Navigationssatelliten (1) in Form eines Modells einer Navigationssatelliten-Trajektorie (6) in demselben Referenz-Koordinatensystem (4) übertragen werden und separate Modelle für die Pseudolite-Trajektorie (5) und für die Navigationssatelliten-Trajektorie (6) verwendet werden, und eine Kennzeichnung des jeweiligen Modells innerhalb der Navigationsdaten vorgesehen ist.

4. Verfahren nach einem der Ansprüche 1 bis 3, **dadurch gekennzeichnet, dass** von den Navigationssatelliten (1) und den Pseudolites (2) die gleiche Frequenz oder das gleiche Frequenzband zur Übertragung der Navigationsdaten verwendet wird, und von jedem Pseudolite und von jedem Navigationssatelliten ein eigener Code zur Codemultiplex-Codierung der Navigationsdaten verwendet wird.

5. Verfahren nach einem der Ansprüche 1 bis 3, **dadurch gekennzeichnet, dass** ein Teil der Pseudolites (2) oder alle Pseudolites (2) den gleichen Code zur Codemultiplex-Codierung der Navigationsdaten verwenden.

6. Satelliten-Navigationssystem, aufweisend Navigationssatelliten (1) und Pseudolites (2), wobei die Navigationssatelliten (1) und die Pseudolites (2) Übertragungseinrichtungen (TU1, TU2) zur Übertragung von Navigationsdaten an Teilnehmer-Endgeräte (UT) aufweisen, die Pseudolites (2) jeweils eine Einrichtung (PMU2) zur Bereitstellung von Modelldaten einer Pseudolite-Trajektorie (5) in einem Referenz-Koordinatensystem (4), **dadurch gekennzeichnet, dass** die Modelldaten die zeitlichen Änderungen der Oberflächenstruktur der Erde (3) und/oder Relativbewegungen des mindestens einen Pseudolites (2) relativ zur Oberfläche der Erde (3) repräsentieren, wobei die Modelldaten orbitabweichende Bewegungen des mindestens einen Pseudolites (2) berücksichtigen, und die Einrichtung (PMU2) zur Einfügung der Modelldaten in die zu übertragenden Navigationsdaten ausgebildet ist, wobei das Modell dasselbe Referenz-Koordinatensystem (4) und dasselbe Datenformat, wie für die Navigationssatelliten (1), zur Übertragung der Navigationsdaten verwendet.

7. Satelliten-Navigationssystem nach Anspruch 6, **dadurch gekennzeichnet, dass** die Navigationssatelliten (1) jeweils eine Einrichtung (PMU1) zur Bereitstellung von Modelldaten einer Navigationssatelliten-Trajektorie (6) in demselben Referenz-Koordinatensystem (4) und zur Einfügung der Modelldaten in die Navigationsdaten aufweisen und alle Einrichtungen (PMU1, PMU2) zur Bereitstellung von Modelldaten derart ausgebildet sind, dass ein gemeinsames Modell für die Pseudolite-Trajektorie (5) und für die Navigationssatelliten-Trajektorie (6) verwendet wird, welches aus einem ersten Untermodell zur Beschreibung von Orbitbewegungen und einem zweiten Untermodell zur Beschreibung von orbitabweichenden Bewegungen besteht.

8. Satelliten-Navigationssystem nach Anspruch 6, **dadurch gekennzeichnet, dass** die Navigationssatelliten (1) jeweils eine Einrichtung (PMU1) zur Bereitstellung von Modelldaten einer Navigationssatelliten-Trajektorie (6) in demselben Referenz-Koordinatensystem (4) und zur Einfügung der Modelldaten in die Navigationsdaten aufweisen und alle Einrichtungen (PMU1, PMU2) zur Bereitstellung von Modelldaten derart ausgebildet sind, dass separate Modelle für die Pseudolite-Trajektorie (5) und für die Navigationssatelliten-Trajektorie (6) verwendet werden, und eine Kennzeichnung des jeweiligen Modells innerhalb der Navigationsdaten vorgesehen ist.

9. Satelliten-Navigationssystem nach einem der Ansprüche 6 bis 8, **dadurch gekennzeichnet, dass** alle Übertragungseinrichtungen (TU1, TU2) zur Übertragung von Navigationsdaten derart ausgebildet sind, dass von den Navigationssatelliten (1) und den Pseudolites (2) die gleiche Frequenz oder das gleiche Frequenzband zur Übertragung der Navigationsdaten verwendet wird, und von jedem Pseudolite (2) und von jedem Navigationssatelliten (1) ein eigener Code zur Codemultiplex-Codierung der Navigationsdaten verwendet wird.

10. Satelliten-Navigationssystem nach einem der Ansprüche 6 bis 8, **dadurch gekennzeichnet, dass** die Übertragungseinrichtungen (TU2) zur Übertragung von Navigationsdaten der Pseudolites (2) derart ausgebildet sind, dass ein Teil der Pseudolites (2) oder alle Pseudolites (2) den gleichen Code zur Codemultiplex-Codierung der Navigationsdaten verwenden.

11. Satelliten-Navigationssystem nach einem der Ansprüche 6 bis 10, **dadurch gekennzeichnet, dass** Pseudolites (2) auf Landfahrzeugen, Wasserfahrzeugen, Luftfahrzeugen oder Raumfahrzeugen installiert sind, insbesondere auf Satelliten, deren Bahnen höher oder niedriger sind als die Bahnen der Navigationssatelliten (1).

12. Teilnehmer-Endgerät (UT) für ein Satelliten-Navigationssystem, aufweisend eine Empfangseinrichtung (RU) zum Empfang von Navigationsdaten von Navigationssatelliten (1) und Pseudolites (2), in die nach einem Verfahren nach einem der Ansprüche 1 bis 5 Modelldaten einer Pseudolite-Trajektorie (5) in einem Referenz-Koordinatensystem (4) eingefügt wurden, wobei eine Positionsmodell-Dekodiereinrichtung (PMDU) zur Extraktion von Modelldaten einer Pseudolite-Trajektorie (5) in einem Referenz-Koordinatensystem (4) aus den Navigationsdaten vorgesehen ist **dadurch gekennzeichnet, dass** die Positionsmodell-Dekodiereinrichtung (PMDU) weiterhin ausgelegt ist zur Berücksichtigung von Modelldaten orbitabweichender Bewegungen mindestens eines Pseudolites (2) und zur Positionsbestimmung mindestens eines Pseudolites (2) auf Basis der Modelldaten, ohne dass separate Einrichtungen zum Empfang und zur Dekodierung separater Kanäle oder Protokolle für Positionsinformationen von Pseudolites (2) vorgesehen sind, wobei das Modell dasselbe Referenz-Koordinatensystem (4) und dasselbe Datenformat, wie für die Navigationssatelliten (1), zur Übertragung der Navigationsdaten verwendet.

13. Teilnehmer-Endgerät nach Anspruch 12, **dadurch gekennzeichnet, dass** die Positionsmodell-Dekodiereinrichtung (PMDU) außerdem zur Extraktion von Modelldaten einer Navigationssatelliten-Trajektorie (6) in demselben Referenz-Koordinatensystem (4) aus den Navigationsdaten und zur Positionsbestimmung mindestens eines Navigationssatelliten (1) auf Basis der Modelldaten ausgebildet ist, wobei die Positionsmodell-Dekodiereinrichtung (PMDU) zur Erkennung und Extraktion eines gemeinsamen Modells für die Pseudolite-Trajektorie (5) und für die Navigationssatelliten-Trajektorie (6) ausgebildet ist, welches aus einem ersten Untermodell zur Beschreibung von Orbitbewegungen und einem zweiten Untermodell zur Beschreibung von orbitabweichenden Bewegungen besteht.

14. Teilnehmer-Endgerät nach Anspruch 12, **dadurch gekennzeichnet, dass** die Positionsmodell-Dekodiereinrichtung (PMDU) außerdem zur Extraktion von Modelldaten einer Navigationssatelliten-Trajektorie (6) in demselben Referenz-Koordinatensystem (4) aus den Navigationsdaten und zur Positionsbestimmung mindestens eines Navigationssatelliten (1) auf Basis der Modelldaten ausgebildet ist, wobei die Positionsmodell-Dekodiereinrichtung (PMDU) zur Erkennung und Extraktion separater Modelle für die Pseudolite-Trajektorie (5) und für die Navigationssatelliten-Trajektorie (6) aufgrund einer Kennzeichnung des jeweiligen Modells innerhalb der Navigationsdaten ausgebildet ist.

15. 19. Teilnehmer-Endgerät nach einem der Ansprüche 12 bis 14, **dadurch gekennzeichnet, dass** die Empfangseinrichtung (RU) derart ausgebildet ist, dass einerseits von den Navigationssatelliten (1) und den Pseudolites (2) Navigationsdaten auf der gleichen Frequenz oder in dem gleichen Frequenzband empfangen werden können, und andererseits die Navigationsdaten jedes Pseudolites (2) und jedes Navigationssatelliten (1) mit Hilfe jeweils eines separaten Codes zur Codemultiplex-Decodierung decodiert werden.

16. Computer-Programm zur Verarbeitung von Navigationsdaten von Navigationssatelliten (1) und Pseudolites (2), in die nach einem Verfahren nach einem der Ansprüche 1 bis 5 Modelldaten einer Pseudolite-Trajektorie (5) in einem Referenz-Koordinatensystem (4) eingefügt wurden, wobei das Computerprogramm Modelldaten für orbitabweichende Bewegungen mindestens eines Pseudolites (2) berücksichtigt, und wobei das Computer-Programm für ein Zusammenwirken mit einer Positionsmodell-Dekodier einrichtung (PMDU) eines Teilnehmer-Endgerätes (UT) nach einem der Ansprüche 15 bis 19 ausgebildet ist.

17. Computer-Programm-Produkt beinhaltend einen maschinenlesbaren Programmträger (DC), auf dem ein Computer-Programm nach Anspruch 16 in Form von elektronisch auslesbaren Steuersignalen gespeichert ist.

## Claims

1. Method for transmission of navigation data to subscriber terminals (UT) in a satellite navigation system, which comprises navigation satellites (1) and pseudolites (2), **characterized in that** a model of a pseudolite trajectory (5) is transmitted within the navigation data for at least one pseudolite (2) using a reference coordinate system (4) which represents the changes over time in the surface structure of the earth (3) and/or relative movements of the at least one pseudolite (2) relative to the surface of the earth (3) and describes movements of the at least one pseudolite (2) which deviate from its orbit, with the model using the same reference coordinate system (4) and the same data format as for the navigation satellites (1) for transmission of the navigation data.

2. Method according to Claim 1, **characterized in that** position information for navigation satellites (1) is transmitted within the navigation data in the form of a model of a navigation satellite trajectory (6) using the same reference coordinate system (4) and a common model is used for the pseudolite trajectory (5) and for the navigation satellite trajectory (6) comprising a first sub-model in order to describe orbit movements, and a second sub-model in order to describe movements which deviate from the orbit.

3. Method according to Claim 1 or 2, **characterized in that** position information for navigation satellites (1) is transmitted within the navigation data in the form of a model of a navigation satellite trajectory (6) using the same reference coordinate system (4) and separate models are used for the pseudolite trajectory (5) and for the navigation satellite trajectory (6) and the respective model is identified within the navigation data.

4. Method according to one of Claims 1 to 3, **characterized in that** the same frequency or the same frequency band is used by the navigation satellites (1) and the pseudolites (2) to transmit the navigation data, and each pseudolite and each navigation satellite uses a dedicated code for code-division multiplex coding of the navigation data.

5. Method according to one of Claims 1 to 3, **characterized in that** some of the pseudolites (2) or all of the pseudolites (2) use the same code for code-division multiplex coding of the navigation data.

6. Satellite navigation system, having navigation satellites (1) and pseudolites (2), with the navigation satellites (1) and the pseudolites (2) having transmission devices (TU1, TU2) for transmission of navigation data to subscriber terminals (UT) and with the pseudolites (2) each having a device (PMU2) for production of model data for a pseudolite trajectory (5) using a reference coordinate system (4), **characterized in that** the model data represents the changes over time in the surface structure of the earth (3) and/or relative movements of the at least one pseudolite (2) relative to the surface of the earth (3), with the model data taking account of movements of the at least one pseudolite (2) which deviate from the orbit, and with the device (PMU2) being designed to insert the model data into the navigation data to be transmitted, with the model using the same reference coordinate system (4) and the same data format as for the navigation satellites (1) for transmission of the navigation data.

7. Satellite navigation system according to Claim 6, **characterized in that** the navigation satellites (1) each have a device (PMU1) for production of model data for a navigation satellite trajectory (6) using the same reference coordinate system (4) and for insertion of the model data into the navigation data, and all of the devices (PMU1, PMU2) are designed to produce model data such that a common model is used for the pseudolite trajectory (5) and for the navigation satellite trajectory (6), and comprises a first sub-model in order to describe orbit movements, and a second sub-model in order to describe movements which deviate from the orbit.

8. Satellite navigation system according to Claim 6, **characterized in that** the navigation satellites (1) each have a device (PMU1) for production of model data for a navigation satellite trajectory (6) using the same reference coordinate system (4) and for insertion of the model data into the navigation data, and all of the devices (PMU1, PMU2) are designed to produce model data such that separate models are used for the pseudolite trajectory (5) and for the navigation satellite trajectory (6), and the respective model is identified within the navigation data.

9. Satellite navigation system according to one of Claims 6 to 8, **characterized in that** all the transmission devices (TU1, TU2) are designed to transmit navigation data such that the same frequency or the same frequency band is used by the navigation satellites (1) and the pseudolites (2) to transmit the navigation data, and each pseudolite (2) and each navigation satellite (1) uses a dedicated code for code-division multiplex coding of the navigation data.

10. Satellite navigation system according to one of Claims 6 to 8, **characterized in that** the transmission devices (TU2) are designed to transmit navigation data of the pseudolites (2) such that some of the pseudolites (2) or all of the pseudolites (2) use the same code for code-division multiplex coding of the navigation data.

11. Satellite navigation system according to one of Claims 6 to 10, **characterized in that** pseudolites (2) are installed on land vehicles, watercraft, aircraft or spacecraft, in particular on satellites, whose orbits are higher or lower than the orbits of the navigation satellites (1).

12. Subscriber terminal (UT) for a satellite navigation system, having a receiving device (RU) for reception of navigation data from navigation satellites (1) and pseudolites (2), into which model data of a pseudolite trajectory (5) was inserted using a method according to one of Claims 1 to 5 and using a reference coordinate system (4), with a position model decoding device (PMDU) being provided for extraction of model data for a pseudolite trajectory (5) from the navigation data using a reference coordinate system (4), **characterized in that** the position model decoding device (PMDU) is also designed to take account of model data of movements of at least one pseudolite (2) which deviate from the orbit, and to find the position of at least one pseudolite (2) on the basis of the model data, without separate devices being provided for reception and for decoding of separate channels or protocols for position information from pseudolites (2), and with the model using the same reference coordinate system (4) and the same data format as for the navigation satellites (1) for transmission of the navigation data.

13. Subscriber terminal according to Claim 12, **characterized in that** the position model decoding device (PMDU) is also designed for extraction of model data for a navigation satellite trajectory (6) from the navigation data using the same reference coordinate system (4), and for finding the position of at least one navigation satellite (1) on the basis of the model data, with the position model decoding device (PMDU) being designed for identification and extraction of a common model for the pseudolite trajectory (5) and for the navigation satellite trajectory (6) which comprises a first sub-model in order to describe orbit movements, and a second sub-model in order to describe movements which deviate from the orbit.

14. Subscriber terminal according to Claim 12, **characterized in that** the position model decoding device (PMDU) is also designed for extraction of model data for a navigation satellite trajectory (6) from the navigation data using the same reference coordinate system (4), and for finding the position of at least one navigation satellite (1) on the basis of the model data, with the position model decoding device (PMDU) being designed for identification and extraction of separate models for the pseudolite trajectory (5) and for the navigation satellite trajectory (6) on the basis of the respective model being identified within the navigation data.

15. Subscriber terminal according to one of Claims 12 to 14, **characterized in that** the receiving device (RU) is designed such that, on the one hand, navigation data can be received from the navigation satellites (1) and from the pseudolites (2) at the same frequency or in the same frequency band, and on the other hand such that the navigation data of each pseudolite (2) and of each navigation satellite (1) is in each case decoded using a separate code for code-division multiplex decoding.

16. Computer program for processing navigation data from navigation satellites (1) and pseudolites (2), into which model data of a pseudolite trajectory (5) was inserted using a method according to one of Claims 1 to 5 and using a reference coordinate system (4), with the computer program taking account of model data for movements of at least one pseudolite (2) which deviate from the orbit, and with the computer program being designed for interaction with a position model decoding device (PMDU) of a subscriber terminal (UT) according to one of Claims 15 to 19.

17. Computer program product containing a machine-legible program storage means (DC), in which a computer program according to Claim 16 is stored in the form of electronically legible control signals.

## Revendications

1. Procédé de transmission de données de navigation à des terminaux abonnés (UT) d'un système de navigation par satellites, qui comprend des satellites de navigation (1) et des pseudolites (2),
**caractérisé en ce que**
dans le cadre des données de navigation pour au moins un pseudolite (2), on transmet un modèle d'une trajectoire de pseudolite (5) dans un système de coordonnées de référence (4) qui représente les variations temporelles de la structure de la surface de la terre (3) et/ou les déplacements relatifs de l'au moins un pseudolite (2) relativement à la surface de la terre (3), modèle qui décrit les déplacements de l'au moins un pseudolite (2) qui s'écartent de l'orbite, et ce modèle utilise, pour la transmission des données de navigation, le même système de coordonnées de référence (4) et le même format de données que pour les satellites de navigation (1).

2. Procédé selon la revendication 1,
**caractérisé en ce que**
dans le cadre des données de navigation, des informations de position pour des satellites de navigation (1) sont transmises sous forme d'un modèle d'une trajectoire de satellites de navigation (6) dans le même système de coordonnées de référence (4), et on utilise pour la trajectoire de pseudolite (5) et pour la trajectoire de satellites de navigation (6), un modèle commun constitué d'un premier sous-modèle pour la description des déplacements sur orbite et d'un deuxième sous-modèle pour la description des déplacements s'écartant de l'orbite.

3. Procédé selon la revendication 1 ou 2,
**caractérisé en ce que**
dans le cadre des données de navigation, des informations de position pour des satellites de navigation (1) sont transmises sous forme d'un modèle d'une trajectoire de satellites de navigation (6) dans le même système de coordonnées de référence (4) et on utilise des modèles séparés pour la trajectoire de pseudolite (5) et pour la trajectoire de satellites de navigation (6), et il est prévu une identification du modèle respectif à l'intérieur des données de navigation.

4. Procédé selon l'une des revendications 1 à 3,
**caractérisé en ce que**
les satellites de navigation (1) et les pseudolites (2) utilisent la même fréquence ou la même bande de fréquence pour la transmission de données de navigation et chaque pseudolite et chaque satellite de navigation utilisent un propre code pour le codage des données de navigation pour multiplexage par répartition du code.

5. Procédé selon l'une des revendications 1 à 3,
**caractérisé en ce qu'**
une partie des pseudolites (2) ou tous les pseudolites (2) utilisent le même code pour le codage des données de navigation pour multiplexage par répartition du code.

6. Système de navigation par satellites, présentant des satellites de navigation (1) et des pseudolites (2), dans lequel les satellites de navigation (1) et les pseudolites (2) possèdent des dispositifs de transmission (TU1, TU2) pour la transmission de données de navigation à des terminaux abonnés (UT), les pseudolites (2) présentent respectivement un dispositif (PMU2) pour fournir des données de modèle d'une trajectoire de pseudolite (5) dans un système de coordonnées de référence (4),
**caractérisé en ce que**
les données de modèle représentent les variations temporelles de la structure de la surface de la terre (3) et/ou les déplacements relatifs de l'au moins un pseudolite (2) relativement à la surface de la terre (3), les données de modèle prennent en compte les déplacements de l'au moins un pseudolite (2) qui s'écartent de l'orbite, et le dispositif (PMU2) est configuré pour introduire les données de modèle dans les données de navigation à transmettre, le modèle utilisant, pour la transmission des données de navigation, le même système de coordonnées de référence (4) et le même format de données que pour les satellites de navigation (1).

7. Système de navigation par satellites selon la revendication 6,
**caractérisé en ce que**
les satellites de navigation (1) présentent respectivement un dispositif (PMU1) pour fournir des données de modèle d'une trajectoire de satellites de navigation (6) dans le même système de coordonnées de référence (4) et pour introduire les données de modèle dans les données de navigation, et tous les dispositifs (PMU1, PMU2) pour fournir des données de modèle sont configurés de telle façon qu'on utilise pour la trajectoire de pseudolite (5) et pour la trajectoire de satellites de navigation (6), un modèle commun constitué d'un premier sous-modèle pour la description de déplacements sur orbite et d'un deuxième sous-modèle pour la description de déplacements qui s'écartent de l'orbite.

8. Système de navigation par satellites selon la revendication 6,
**caractérisé en ce que**
les satellites de navigation (1) présentent respectivement un dispositif (PMU1) pour fournir des données de modèle d'une trajectoire de satellites de navigation (6) dans le même système de coordonnées de référence (4) et pour introduire les données de modèle dans les données de navigation, et tous les dispositifs (PMU1, PMU2) pour fournir des données de modèle sont configurés de telle façon que des modèles séparés sont utilisés pour la trajectoire de pseudolite (5) et pour la trajectoire de satellites de navigation (6), et il est prévu une identification du modèle respectif à l'intérieur des données de navigation.

9. Système de navigation par satellites selon l'une des revendications 6 à 8,
**caractérisé en ce que**
les dispositifs de transmission (TU1, TU2) pour la transmission des données de navigation sont configurés de telle façon que les satellites de navigation (1) et les pseudolites (2) utilisent la même fréquence ou la même bande de fréquence pour la transmission des données de navigation, et chaque pseudolite (2) et chaque satellite de navigation (1) utilisent un propre code pour le codage des données de navigation pour le multiplexage par répartition du code.

10. Système de navigation par satellites selon l'une des revendications 6 à 8,
**caractérisé en ce que**
les dispositifs de transmission (TU2) pour la transmission des données de navigation des pseudolites (2) sont configurés de telle façon qu'une partie des pseudolites (2) ou tous les pseudolites (2) utilisent le même code pour le codage des données de navigation pour le multiplexage par répartition du code.

11. Système de navigation par satellites selon l'une des revendications 6 à 10,
**caractérisé en ce que**
les pseudolites (2) sont installés sur des véhicules terrestres, embarcations, aéronefs ou véhicules spatiaux, en particulier sur des satellites dont les orbites sont plus hautes ou plus basses que les orbites des satellites de navigation (1).

12. Terminal abonné (UT) pour un système de navigation par satellites, présentant un dispositif de réception (RU) pour la réception de données de navigation de satellites de navigation (1) et de pseudolites (2), dans lequel des données de modèle d'une trajectoire de pseudolite (5) ont été introduites dans un système de coordonnées de référence (4) par un procédé selon l'une des revendications 1 à 5, et un dispositif de décodage du modèle de position (PMDU) est prévu pour extraire des données de modèle d'une trajectoire de pseudolite (5) dans un système de coordonnées de référence (4) à partir des données de navigation,
**caractérisé en ce que**
le dispositif de décodage du modèle de position (PMDU) est également conçu pour prendre en compte des données de déplacements d'au moins un pseudolite (2) qui s'écartent de l'orbite et pour déterminer la position d'au moins un pseudolite (2) sur la base des données de modèle, sans que des dispositifs séparés pour la réception et pour le décodage de canaux ou de protocole séparés pour les informations de position de pseudolites (2) soient prévus, et le modèle utilise le même système de coordonnées de référence (4) et le même format de données que pour les satellites de navigation (1), pour la transmission des données de navigation.

13. Terminal abonné selon la revendication 12,
**caractérisé en ce que**
le dispositif de décodage du modèle de position (PMDU) est configuré également pour extraire des données de modèle d'une trajectoire de satellites de navigation (6) dans le même système de coordonnées de référence (4) à partir des données de navigation et pour déterminer la position d'au moins un satellite de navigation (1) sur la base des données de modèle, le dispositif de décodage du modèle de position (PMDU) étant configuré pour détecter et extraire un modèle commun pour la trajectoire de pseudolite (5) et pour la trajectoire de satellites de navigation (6), lequel est constitué d'un premier sous-modèle pour la description des déplacements sur orbite et d'un deuxième sous-modèle pour la description des déplacements s'écartant de l'orbite.

14. Terminal abonné selon la revendication 12,
**caractérisé en ce que**
le dispositif de décodage du modèle de position (PMDU) est configuré également pour extraire des données de modèle d'une trajectoire de satellites de navigation (6) dans le même système de coordonnées de référence (4) à partir des données de navigation et pour déterminer la position d'au moins un satellite de navigation (1) sur la base des données de modèle, le dispositif de décodage du modèle de position (PMDU) étant configuré pour détecter et extraire des modèles séparés pour la trajectoire de pseudolite (5) et pour la trajectoire de satellites de navigation (6), grâce à une identification du modèle respectif à l'intérieur des données de navigation.

15. Terminal abonné selon l'une des revendications 12 à 14,
**caractérisé en ce que**
le dispositif de réception (RU) est configuré de telle façon que, d'une part, les satellites de navigation (1) et les pseudolites (2) peuvent recevoir des données de navigation sur la même fréquence ou dans la même bande de fréquence et, d'autre part, les données de navigation de chaque pseudolite (2) et de chaque satellite de navigation (1) sont décodées à l'aide d'un code séparé pour le décodage par multiplexage par répartition du code.

16. Programme d'ordinateur pour le traitement de données de navigation de satellites de navigation (1) et de pseudolites (2), dans lesquelles des données de modèle d'une trajectoire de pseudolite (5) ont été introduites dans un système de coordonnées de référence (4) par un procédé selon l'une des revendications 1 à 5, le programme d'ordinateur prend en compte les données de modèle pour les déplacements d'au moins un pseudolite (2) qui s'écartent de l'orbite, et le programme d'ordinateur est configuré pour une coopération avec un dispositif de décodage du modèle de position (PMDU) d'un terminal abonné (UT) selon l'une des revendications 12 à 15.

17. Produit pour programme d'ordinateur contenant un support de programme (DC) lisible par machine, sur lequel un programme d'ordinateur selon la revendication 16 est enregistré sous forme de signaux de commande lisibles électroniquement.
